# EUROPÄISCHE PATENTSCHRIFT

(11) **EP 3 807 596 B1**
(45) Veröffentlichungstag und Bekanntmachung des Hinweises auf die Patenterteilung: **21.06.2023**
(21) Anmeldenummer: 19710347.6
(22) Anmeldetag: 04.03.2019
(51) Int. Cl.: G01C 21/34

(54) **VERFAHREN ZUR ERMITTLUNG EINER OPTIMALEN FAHRTROUTE, NAVIGATIONSSYSTEM UND BRENNSTOFFZELLENFAHRZEUG**
METHOD FOR DETERMINING AN OPTIMAL ROUTE, NAVIGATION SYSTEM AND FUEL CELL VEHICLE
PROCEDE POUR DETERMINER UNE ROUTE OPTIMALE, SYSTEME DE NAVIGATION ET VEHICULE A PILE A COMBUSTIBLE

(30) Priorität: 13.06.2018 DE 102018209443
(43) Veröffentlichungstag der Anmeldung: 21.04.2021
(73) Patentinhaber: Audi AG, 85045 Ingolstadt (DE)
(72) Erfinder: RUF, Markus, 73550 Waldstetten (DE); MÜLLER, Kai, 74626 Bretzfeld (DE); BRECHTER, Michael, 74219 Möckmühl (DE); GRAEBNER, Michael, 74639 Zweiflingen (DE)
(74) Vertreter: Hentrich Patent- & Rechtsanwaltspartnerschaft mbB
(86) Internationale Anmeldenummer: PCT/EP2019/055288
(87) Internationale Veröffentlichungsnummer: WO 2019/238279

(56) Entgegenhaltungen:
- DE-A1-102013 003 608
- US-A1- 2015 046 085
- US-B2- 8 676 400
- VATANPARVAR KOROSH ET AL: "Eco-Friendly Automotive Climate Control and Navigation System for Electric Vehicles", 2016 ACM/IEEE 7TH INTERNATIONAL CONFERENCE ON CYBER-PHYSICAL SYSTEMS (ICCPS), IEEE, 11. April 2016 (2016-04-11), Seiten 1-10, XP032905466, DOI: 10.1109/ICCPS.2016.7479101 [gefunden am 2016-05-25]
- BIESDORF JOHANNES ET AL: "Influence of air contaminants on planar, self-breathing hydrogen PEM fuel cells in an outdoor environment", JOURNAL OF POWER SOURCES, ELSEVIER, AMSTERDAM, NL, vol. 247, 7 September 2013 (2013-09-07), pages 339-345, XP028760203, ISSN: 0378-7753, DOI: 10.1016/J.JPOWSOUR.2013.08.064

## Beschreibung

Die Erfindung betrifft ein Verfahren zur Ermittlung einer optimalen Fahrtroute für ein Brennstoffzellenfahrzeug mit wenigstens einer Brennstoffzelle sowie mit einem Navigationssystem, umfassend die Schritte von Anspruch 1.

Gegenstand der Erfindung ist außerdem ein Navigationssystem nach Anspruch 7 und ein Brennstoffzellenfahrzeug mit einem solchen Navigationssystem.

Brennstoffzellensysteme, wie sie beispielsweise zum Betrieb von Kraftfahrzeugen eingesetzt werden, sind wegen der damit verbundenen Leistungsanforderung aus einer Mehrzahl von Brennstoffzellen aufgebaut, die in einem Brennstoffzellenstapel zusammengefasst sind. Jede einzelne Brennstoffzelle umfasst eine Membranelektrodenanordnung gebildet aus einer protonenleitenden Membran, auf deren einer Seite die Anode und auf deren anderer Seite die Kathode ausgebildet ist. Den Elektroden werden Reaktantengase zugeführt, nämlich anodenseitig insbesondere Wasserstoff und kathodenseitig Sauerstoff bzw. ein sauerstoffhaltiges Gas, insbesondere Luft. Bei der elektrochemischen Reaktion reagiert der Wasserstoff mit dem Sauerstoff der Luft unter Bildung von Wasser.

Brennstoffzellen eines Brennstoffzellenfahrzeugs unterliegen aufgrund der gewählten Fahrtroute und aufgrund von der entlang dieser Route herrschenden Umweltbedingungen unterschiedlichsten Leistungsanforderungen. Die deshalb häufig wechselnden Spannungsniveaus in der Zelle und/oder die sich häufig verändernde Abnahme eines Stroms von der Zelle können zu einer chemisch induzierten Degradation der Membran führen. Der Membran-elektrodenanordnung sind hoch aktive Katalysatoren zugeordnet wie zum Beispiel Platin. Ein möglicher Mechanismus einer solchen chemisch induzierten Degradation, der zu einem permanenten Leistungsverlust von Zellen des Brennstoffzellensystems führt, ist die Katalysatoroxidbildung auf der Kathodenseite der Membranelektrodenanordnung. Zudem wird auf die unterschiedlichen Leistungsanforderungen entlang der Fahrtroute mit einer Anpassung des Feuchteniveaus der Membran und/oder der Massenströme der Reaktantengase reagiert, so dass die Membran aufgrund der sich häufig verändernden Betriebsbedingungen außerdem einer mechanischen Degradation unterliegt. Solche Degradationseffekte innerhalb der Brennstoffzelle führen zu einem unerwünschten Alterungsprozess.

In der DE 20 2013 007 358 U1 ist ein elektronisches Inspektionssystem für ein Kraftfahrzeug beschrieben, welches ausgebildet ist, das Alter und die Laufleistung des Kraftfahrzeugs und insbesondere die Beanspruchung einer Fahrzeugkomponente zu ermitteln. Mittels einer Bestimmungsvorrichtung wird ein Verschleißmaß für die Fahrzeugkomponente für eine bisherige Lebensdauer angezeigt. Hierbei können auch routenspezifische Verschleißbeurteilungen verwendet werden, um zusammen mit einem Navigationsgerät eine verschleißarme Route zu ermitteln. Dieses Inspektionssystem setzt sich nicht mit einem Verschleiß oder mit den Degradationseffekten eines Brennstoffzellensystems auseinander.

In der DE 10 2008 063 088 A1 ist ein Verfahren zum Betreiben eines in einem Fahrzeug angeordneten Brennstoffzellensystems beschrieben, welches ein Steuergerät aufweist, das mit einer Navigationseinrichtung des Fahrzeugs gekoppelt ist. Bei einer Fahrtzieleingabe kann die Navigationseinrichtung selbsttätig die voraussichtliche Fahrzeit und den voraussichtlichen Fahrtendzeitpunkt berechnen, wobei das Brennstoffzellensystem eine entsprechend frühzeitige Abschaltprozedur initiiert, so dass das Abstellen des Brennstoffzellensystems nur geringe Zeit in Anspruch nimmt, nachdem das Fahrzeug abgestellt wurde.

In der DE 10 2013 105 505 A1 ist eine Navigationseinrichtung, ein Antriebssystem mit einer solchen und ein Verfahren zur Ermittlung einer Fahrtroute beschrieben.

Die US 8 867 400 B2 beschreibt eine Routennavigation eines elektrisch betriebenen Kraftfahrzeugs, das mit einer Ladevorrichtung für einen Energiespeicher versehen ist. Dabei werden Wetterdaten oder Wet-terprognosen dafür verwendet, um deren Einfluss auf die Batterie auszuwerten, wobei diejeni-ge Navigationsroute gewählt wird, die zu der geringsten Degradation der Batterie des Elektro-fahrzeugs führt.

Eco-Friendly Automotive Climate Control and Navigation System for electric Vehicles von Vatanparvar Korosh et al. beschreibt ein System zur Routenberechnung, bei dem Wetterdaten, die Batteriedegradation und der Betrieb sowie der elektrische Verbrauch der Klimaanlage Berücksichtigung findet.

Die US 2015/0046085 A1 beschreibt ein beispielsweise auf einem Smartphone ausgeführtes Navigationssystem, bei dem kontinuierlich geprüft wird, ob nicht eine bessere Strecke verfügbar ist, aufgrund einer verschlechterten Verkehrslage entlang der aktuell gewählten Strecke.

Es ist daher die Aufgabe der vorliegenden Erfindung, ein Verfahren zur Ermittlung einer optimalen Fahrtroute, ein Navigationssystem und ein Brennstoffzellenfahrzeug mit einem solchen Navigationssystem bereitzustellen, die bei der Auswahl der optimalen Fahrtroute die Degradation oder die erwartete Degradation der Brennstoffzelle berücksichtigen. Dabei kann eine Routenauswahl dahingehend getroffen werden, die batteriebewusst zur Verlängerung der Batterielebenszeit ist oder verläuft.

Der das Verfahren betreffende Teil der Aufgabe wird durch ein Verfahren mit den Merkmalen des Anspruches 1 gelöst. Vorteilhafte Ausgestaltungen mit zweckmäßigen Weiterbildungen des Verfahrens sind in den abhängigen Ansprüchen angegeben.

Das Verfahren zeichnet sich insbesondere dadurch aus, dass ein Streckenabschnitt dann als einer der Streckenabschnitte mit verstärktem Degradationseffekt klassifiziert wird, wenn dort eine erhöhte Emissionsbelastung zu erwarten ist. Es ist von Vorteil, solche Streckenabschnitte mit erhöhter Emissionsbelastung zu vermeiden, denn ein Brennstoffzellensystem mit einer Polymerelektrolytmembran-Brennstoffzelle nutzt Sauerstoff, insbesondere den in der Umgebungsluft enthaltenen Sauerstoff, um die elektrochemische Reaktion durchzuführen. Da aber in Gebieten mit hoher Emissionsbelastung, beispielsweise innerhalb von Städten oder innerhalb von Tunneln, die Luft einem erhöhten Verschmutzungsgrad unterliegt, führt dies zu einer Degradation der Brennstoffzelle, die es zu vermeiden gilt.

Mit dem Verfahren ist darüber hinaus der Vorteil verbunden, dass einer erhöhten Alterung des Brennstoffzellensystems aufgrund einer ungünstigen Routenwahl vorgebeugt wird. Das Verfahren kann daher koexistieren neben anderen Optimierungszielen wie, "kürzeste Zeit", "geringster Verbrauch" oder "keine Autobahn". Somit steht eine weitere Alternative, nämlich "geringe Brennstoffzellenalterung", zur Verfügung, die vom Nutzer ausgewählt werden kann.

In einer Ausgestaltung des Verfahrens wird ein Streckenabschnitt dann als einer der Streckenabschnitte mit verstärktem Degradationseffekt klassifiziert, wenn dort ein erhöhter Leistungsbedarf der Brennstoffzelle zu erwarten ist. Ein solcher Leistungsbedarf liegt beispielsweise an einem Streckenabschnitt mit großer Steigung vor. Es ist daher von Vorteil, wenn eine Fahrtroute vorgeschlagen wird, die eine geringere Anzahl solcher Streckenabschnitte aufweist, die einem erhöhten Leistungsbedarf der Brennstoffzelle unterliegen.

Alternativ oder ergänzend wird ein Streckenabschnitt auch dann als einer der Streckenabschnitte mit verstärktem Degradationseffekt klassifiziert, wenn dort prognostizierte Wetterdaten negativ für den Betrieb der Brennstoffzelle sind. Wenn beispielsweise sehr hohe Außentemperaturen vorliegen, so ist eine Kühlung des Brennstoffzellensystems nur mit einer erhöhten Leistungsanforderung zu bewerkstelligen, so dass beispielsweise Fahrten durch Streckenabschnitte mit solchen erhöhten Temperaturen vermieden werden. Umgekehrt gilt es auch Fahrten durch Gebiete zu vermeiden, die das Brennstoffzellensystem Frostbedingungen aussetzen.

Alternativ oder ergänzend kann auch dann ein Streckenabschnitt als einer der Streckenabschnitte mit verstärktem Degradationseffekt klassifiziert werden, wenn eine dort prognostizierte Verkehrslage negativ für den Betrieb der Brennstoffzelle ist. Auf einer stauträchtigen Route die Brennstoffzelle häufig im Leerlauf betrieben, was zu einer erhöhten Alterung oder zu einem verstärkten Degradationseffekt führt. Es wird daher ein Streckenabschnitt gewählt, der unter Umständen zwar zu einer längeren Fahrtroute führt, der aber eine geringere Alterung der Brennstoffzelle zur Folge hat.

Es ist von Vorteil, wenn der verstärkte Degradationseffekt in Ausprägungsgrade untergliedert wird, und wenn bei der Ermittlung des Gesamtdegradationsgrad diejenigen Streckenabschnitte mit verstärktem Degradationseffekt in einem höherem Ausprägungsgrad stärker gewichtet werden als diejenigen Streckenabschnitte mit einem verstärkten Degradationseffekt in einem niedrigerem Ausprägungsgrad. Damit ist der Vorteil verbunden, dass unterschiedliche Wertzahlen zur Verfügung gestellt sind, die den einzelnen Streckenabschnitten mit verstärktem Degradationseffekt zugeordnet werden können. Es kann nämlich vorkommen, dass ein Streckenabschnitt mit einem verstärkten Degradationseffekt aufgrund einer erhöhten Leistungsanforderung vorliegt, bei dem zusätzlich aber ein Stau aufgrund eines Unfalls besteht, so dass dies zu einem verstärkten Degradationseffekt in einem erhöhten Ausprägungsgrad führt, der bei der Routenermittlung stärker zu gewichten ist als Streckenabschnitte, die beispielsweise lediglich durch einen Tunnel führen, bei denen aber kein Stau vorliegt.

Es hat sich als vorteilhaft erwiesen, wenn bei besonders stark gealterten Brennstoffzellensystemen der Standardroutenvorschlag in Richtung alterungsarme Routen verschoben wird, um eine weitere Haltbarkeit des Brennstoffzellensystems sicherzustellen. In diesem Zusammenhang hat es sich als sinnvoll erwiesen, ein Degradationsmaß der Brennstoffzelle zu bestimmen, wobei die Ermittlung der optimalen Fahrtroute zusätzlich in Abhängigkeit dieses Degradationsmaßes erfolgt.

Die das Navigationssystem betreffende Aufgabe wird mit einem Navigationssystem mit dem Merkmalsbestand des Anspruchs 7 gelöst. Vorteilhafte Ausgestaltungen mit zweckmäßigen Weiterbildungen des Systems sind in dem abhängigen Anspruch angegeben.

Das Navigationssystem für ein wenigstens eine Brennstoffzelle aufweisendes Brennstoffzellenfahrzeug umfasst insbesondere eine Speichereinheit, in welcher zumindest zeitweise eine mehrere Streckenabschnitte umfassende topografische Karte hinterlegbar oder hinterlegt ist. Zudem umfasst es eine Routenbestimmungseinrichtung, die ausgebildet ist, wenigstens zwei Fahrtrouten von einer Startposition zu einer Zielposition zu ermitteln, welche aus einem oder aus mehreren der Streckenabschnitte zusammengesetzt sind. Zudem ist die Routenbestimmungseinrichtung ausgebildet, diejenigen Streckenabschnitte zu identifizieren, entlang welchen die Brennstoffzelle einem erwarteten verstärktem Degradationseffekt unterliegt. Die Routenbestimmungseinrichtung ist außerdem ausgebildet, einen Gesamtdegradationsgrad der Brennstoffzelle für jede der ermittelten Fahrtrouten anhand der zur jeweiligen Fahrtroute identifizierten Streckenabschnitte mit dem verstärkten Degradationseffekt der Brennstoffzelle zu ermitteln. Weiterhin ist die Routenbestimmungseinrichtung zudem ausgebildet, diejenige Fahrtroute als eine optimale Fahrtroute auszuwählen, die den geringsten Gesamtdegradationsgrad der Brennstoffzelle aufweist. Letztendlich ist eine Datenempfangseinrichtung vorhanden zum streckenabschnittsbezogenen Empfang von Daten zur Emissionsbelastung, und die Routenbestimmungseinrichtung ist ausgebildet, die Daten zur Emissionsbelastung bei der Auswahl der optimalen Fahrtroute zu berücksichtigen. In anderen Worten ist die Datenempfangseinrichtung ausgebildet, um Daten zur Emissionsbelastung an einem Streckenabschnitt zu empfangen, die dann in der Routenbestimmungseinrichtung Berücksichtigung finden bei der Auswahl der optimalen Fahrtroute. Fahrten durch Gebiete mit erhöhte Emissionsbelastung (NOx, HC, CO, et cetera) führen zu einer erhöhten Alterung der Brennstoffzelle und finden dabei erfindungsgemäß bei der Auswahl der optimalen Fahrtroute Berücksichtigung.

Mit dem erfindungsgemäßen Navigationssystem ist also der Vorteil verbunden, dass ein Nutzer eine weitere Auswahlmöglichkeit der Routenberechnung hat, und dass der Routenvorschlag abhängig vom Alterungszustandes Brennstoffzellensystems ist. In diesem Zusammenhang ist es möglich eine kombinierte Berechnung des Brennstoffzellenalters und eines Batteriealters zu durchlaufen. Außerdem kann der Nutzer aktiv das Alterungsverhalten der Brennstoffzelle beeinflussen durch eine entsprechende Fahr- oder Betriebsweise.

In diesem Zusammenhang hat es sich als vorteilhaft erwiesen, wenn eine Datenempfangseinrichtung vorhanden ist zum streckenabschnittsbezogenen Empfang von Wetterdaten. Somit kann in der Ermittlung des Routenvorschlags, mithin in der Ermittlung der optimalen Fahrtroute äußere Randbedingungen und Umwelteinflüsse berücksichtigt werden, die das Wetter, beispielsweise die Temperatur oder den Niederschlag oder den Luftdruck etc. berücksichtigen können.

Alternativ oder ergänzend ist die Datenempfangseinrichtung ausgebildet, um Daten zur Verkehrslage zu empfangen, so dass der Routenvorschlag stauträchtige Fahrtrouten möglichst meidet, an welchen die Brennstoffzelle einem verstärktem Degradationseffekt unterliegt.

Zudem ist es von Vorteil, wenn das Navigationssystem, insbesondere dessen Datenempfangseinrichtung, ausgebildet ist, Positionsdaten zur Bestimmung der eigenen Position oder derjenigen von Drittfahrzeugen zu erfassen, um auf dieser Basis die optimale Fahrtroute auszuwählen.

Die das Brennstoffzellenfahrzeug betreffende Aufgabe wird mit einem Brennstoffzellenfahrzeug mit dem Merkmalsbestand des Anspruchs 9 gelöst. Es umfasst ein Brennstoffzellensystem, wie es vorstehend erläutert wurde sowie ein Navigationssystem zur Ermittlung einer optimalen Fahrtroute. Es zeichnet sich durch längere Wartungsintervalle aus aufgrund der verlängerten Lebenskurve des Brennstoffzellensystems.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: ein Navigationssystem und ein Brennstoffzellensystem eines Brennstoffzellenfahrzeugs (schematisch gezeigt),
- Fig. 2: eine topografische Karte mit zwei Fahrtrouten (schematisch gezeigt), und
- Fig. 3: eine topografische Karte mit zwei Fahrtrouten (schematisch gezeigt).

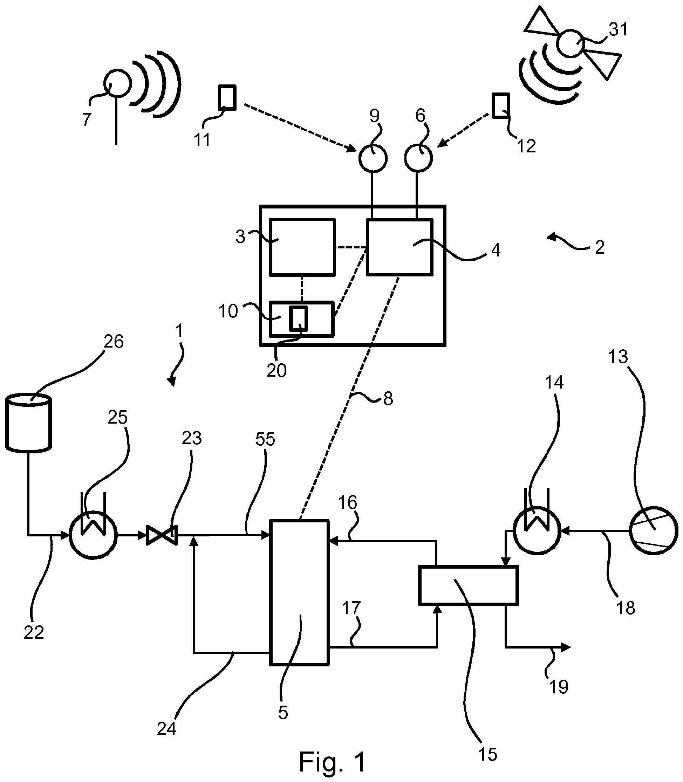

In Figur 1 ist ein über eine Kommunikationsverbindung 8 mit einem Navigationssystem 2 verbundenes Brennstoffzellensystem 1 gezeigt, welches einen Brennstoffzellenstapel 5 umfasst, der eine Mehrzahl von in Reihe geschalteten Brennstoffzellen aufweist. Das Brennstoffzellensystem 1 und das Navigationssystem 2 sind Teile eines nicht näher dargestellten Brennstoffzellenfahrzeugs.

Jede der Brennstoffzellen umfasst eine Anode und eine Kathode sowie eine die Anode von der Kathode trennende protonenleitfähige Membran. Die Membran ist aus einem lonomer, vorzugsweise einem sulfonierten Tetrafluorethylen-Polymer (PTFE) oder einem Polymer der perfluorierten Sulfonsäure (PFSA) gebildet. Alternativ kann die Membran als eine Hydrocarbon-Membran gebildet sein.

Den Anoden und/oder den Kathode kann zusätzlich ein Katalysator beigemischt sein, wobei die Membranen vorzugsweise auf ihrer ersten Seite und/oder auf ihrer zweiten Seite mit einer Katalysatorschicht aus einem Edelmetall oder aus Gemischen umfassend Edelmetalle wie Platin, Palladium, Ruthenium oder dergleichen beschichtet sind, die als Reaktionsbeschleuniger bei der Reaktion der jeweiligen Brennstoffzelle dienen.

Über Anodenräume innerhalb des Brennstoffzellenstapels 5 wird den Anoden Brennstoff (z.B. Wasserstoff) zugeführt. In einer Polymerelektrolytmembranbrennstoffzelle (PEM-Brennstoffzelle) werden an der Anode Brennstoff oder Brennstoffmoleküle in Protonen und Elektronen aufgespaltet. Die Membran lässt die Protonen (z.B. H⁺) hindurch, ist aber undurchlässig für die Elektronen (e⁻). An der Anode erfolgt dabei die folgende Reaktion: 2H₂ → 4H⁺ + 4e⁻ (Oxidation/Elektronenabgabe). Während die Protonen durch die Membran zur Kathode hindurchtreten, werden die Elektronen über einen externen Stromkreis an die Kathode oder an einen Energiespeicher geleitet.

Über Kathodenräume innerhalb des Brennstoffzellenstapels 5 kann den Kathoden Kathodengas (z.B. Sauerstoff oder Sauerstoff enthaltende Luft) zugeführt werden, so dass kathodenseitig die folgende Reaktion stattfindet: O₂ + 4H⁺ + 4e⁻ → 2H₂O (Reduktion/Elektronenaufnahme).

Die Anodenräume sind vorliegend über eine Anodenzufuhrleitung 22 mit einem den Brennstoff bereitstellenden Brennstoffspeicher 26 verbunden. Über eine Anodenrezirkulationsleitung 24 kann an den Anoden nicht abreagierter Brennstoff den Anodenräumen erneut zugeführt werden. Hierbei wird der Anodenrezirkulationsleitung 24 ein nicht näher dargestelltes Rezirkulationsgebläse zugeordnet bzw. fluidmechanisch in die Anodenrezirkulationsleitung 24 eingekoppelt. Zur Regelung der Zufuhr des Brennstoffes ist der Anodenzufuhrleitung 22 ein Brennstoffstellglied 23 zugeordnet bzw. in der Anodenzufuhrleitung 22 angeordnet. Dieses Brennstoffstellglied 23 ist vorzugsweise als ein Druckregelventil gebildet. Stromaufwärts des Druckregelventils ist ein Wärmetauscher 25 in Form eines Rekuperators zur (Vor-)Erwärmung oder Konditionierung des Brennstoffes angeordnet.

Luft- oder kathodenseitig ist ein Verdichter 13 vorhanden, der vorliegend Umgebungsluft ansaugt und verdichtet. Aufgrund dieser Verdichtung erhöht sich die Temperatur des angesaugten Kathodengases, so dass es über eine Verdichterleitung 18 zunächst an einen Ladeluftkühler 14 geleitet wird, um es wieder auf eine gewünschte Temperatur herunter zu kühlen. Ausgehend vom Ladeluftkühler 14 wird das angesaugte, komprimierte Kathodengas einem Befeuchter 15 zugeleitet. Im Befeuchter 15 wird das trockene Kathodengases mit der Feuchtigkeit des Kathodenabgases, welches über eine Kathodenabgasleitung 17 dem Befeuchter 15 zugeführt wird, vermischt und damit ebenfalls befeuchtet, bevor es über die Kathodenzufuhrleitung 16 den Kathodenräumen des Brennstoffzellenstapels 5 zugeführt wird. Außerdem ist der Befeuchter 15 mit einer Abgasleitung 19 verbunden, über welche das verbleibende Kathodenabgas aus dem Brennstoffzellensystem 1 ausgeleitet wird.

Das Navigationssystem 2 umfasst vorliegend eine Speichereinheit 10, in der eine topografische Karte 20 hinterlegt ist. Die Speichereinheit 10 des Navigationssystems 2 ist mit einer Routenbestimmungseinrichtung 3 verbunden, wie durch die gestrichelt dargestellte Linie illustriert ist. Die Routenbestimmungseinrichtung 3 ist ausgebildet, wenigstens zwei Fahrtrouten 21a, 21b von einer Startposition 27 zu einer Zielposition 28 zu ermitteln, welche aus einem oder aus mehreren Streckenabschnitten 29 zusammengesetzt sind. Zudem ist die Routenbestimmungseinrichtung 3 ausgebildet, diejenigen Streckenabschnitte 291 zu identifizieren, entlang welchen die Brennstoffzelle einem erwarteten verstärktem Degradationseffekt unterliegt. Zusätzlich ist die Routenbestimmungseinrichtung 3 ausgebildet, einen Gesamtdegradationsgrad der Brennstoffzelle für jede der ermittelten Fahrtrouten 21a, 21b anhand der zur jeweiligen Fahrtroute 21a, 21b identifizierten Streckenabschnitte 291 mit dem verstärkten Degradationseffekt der Brennstoffzelle zu ermitteln. Letztlich ist die Routenbestimmungseinrichtung 3 auch ausgebildet, diejenige Fahrtroute 21a, 21b als eine optimale Fahrtroute 30 auszuwählen, die den geringsten Gesamtdegradationsgrad der Brennstoffzelle aufweist.

Vorliegend weist das Navigationssystem 2 zusätzlich eine Datenempfangseinrichtung 4 auf, die ausgebildet ist, Wetterdaten 11 eines Datendienstes 7 mittels eines Sensors 9, insbesondere streckenabschnittsbezogen, zu empfangen. Zudem weist die Datenempfangseinrichtung 4 einen GPS-Sensor 6 auf. Sie deshalb außerdem ausgebildet, Positionsdaten 12, beispielsweise satellitengestützt mittels eines Satelliten 31, insbesondere streckenabschnittsbezogenen, zu empfangen. Der Sensor 9 und die Datenempfangseinrichtung 4 können zudem ausgebildet sein, Daten zur Verkehrslage und/oder Daten zur Emissionsbelastung, insbesondere streckenabschnittsbezogen, zu empfangen. Die von der Datenempfangseinrichtung 4 empfangenen Daten können über eine Kommunikationsleitung an die Routenbestimmungseinrichtung 3 übermittelt werden. Alternativ oder ergänzend können die von der Datenempfangseinrichtung 4 empfangenen Daten auch über eine Datenleitung der Speichereinheit 10 zugeführt werden und dort, zumindest zeitweise, hinterlegt werden. Alternativ oder ergänzend kann die Datenempfangseinrichtung 4 ausgebildet sein, um von dem Brennstoffzellenstapel 5 ein Degradationsmaß der Brennstoffzellen abzufragen, um dieses bei der Ermittlung einer optimalen Fahrtroute 30 ebenfalls zu berücksichtigen.

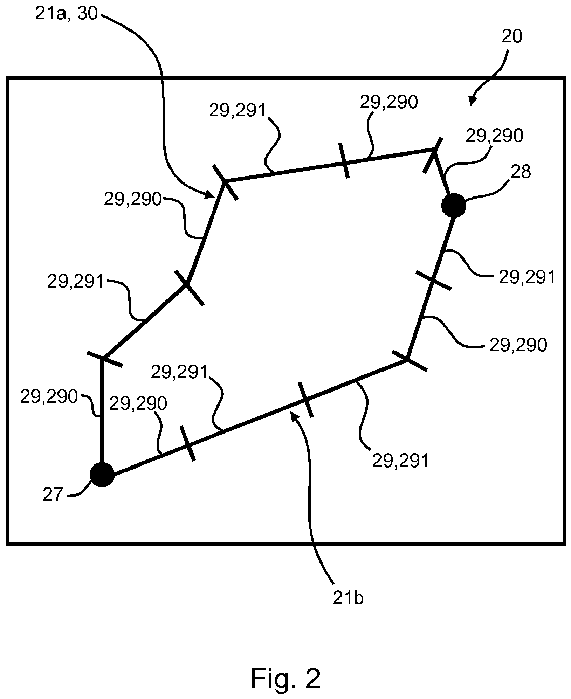

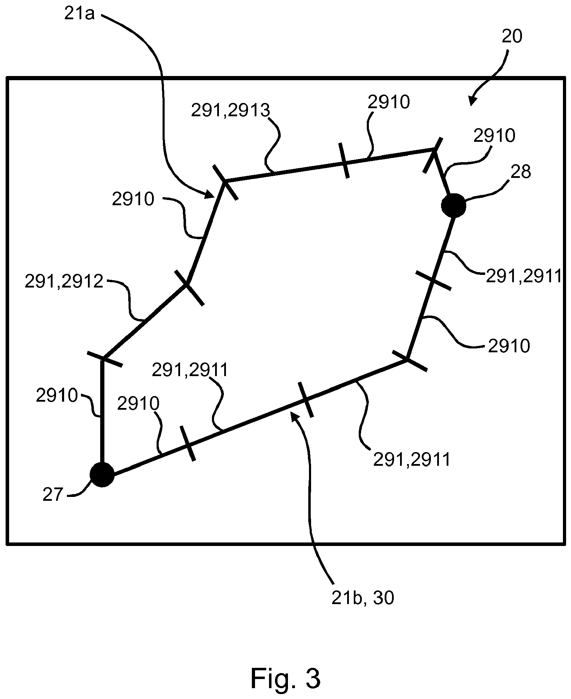

Anhand der Figuren 2 und 3 sei ein Verfahren zur Ermittlung einer optimalen Fahrtroute 30 für ein Brennstoffzellenfahrzeug mit wenigstens einer Brennstoffzelle sowie mit dem Navigationssystem 2 erläutert.

In beiden Figuren sind - schematisch - zwei Fahrtrouten 21a, 21b gezeigt, die eine Startposition 27 mit einer Zielposition 28 verbinden. Die erste Fahrtroute 21a umfasst dabei vorliegend insgesamt sechs der Streckenabschnitte 29, die vorzugsweise äquidistant sind. Die zweite Fahrtroute 21b umfasst demgegenüber lediglich fünf der Streckenabschnitte 29, die vorzugsweise ebenfalls äquidistant sind, so dass zu erkennen ist, dass die zweite Fahrtroute 21b kürzer ist als die erste Fahrtroute 21a.

Die Routenbestimmungseinrichtung 3 ist aufgrund ihrer Eigenschaft als Prozessor, als CPU oder als Mikroprozessor ausgebildet, diejenigen Streckenabschnitte 291 zu identifizieren, entlang welchen die Brennstoffzelle einem erwarteten verstärktem Degradationseffekt unterliegt. Alle anderen Streckenabschnitte 29 sind also Streckenabschnitte 290, die einen geringen oder keinen Degradationseffekt bei der Brennstoffzelle hervorrufen. Die Routenbestimmungseinrichtung 3 ermittelt - nach Identifizierung der Streckenabschnitte 291 mit verstärktem Degradationseffekt - einen Gesamtdegradationsgrad für jede der ermittelten Fahrtrouten 21a, 21b. Dies kann in einem einfachen Ausführungsbeispiel lediglich anhand der Häufigkeit der Streckenabschnitte 291 mit verstärktem Degradationseffekt entlang der jeweiligen Fahrtroute 20a, 21b erfolgen. Die Routenbestimmungseinrichtung 3 wird also im Beispiel der Figur 2 erkennen, dass das Brennstoffzellenfahrzeug entlang der Fahrtroute 21a insgesamt zweimal einen Streckenabschnitt 291 durchqueren wird, entlang welchem die Brennstoffzelle einem verstärkten Degradationseffekt unterliegt.

Ein mit der Häufigkeit der Streckenabschnitte 291 korrelierender Gesamtdegradationsgrad entlang der ersten Fahrtroute 21a entspräche einem einfachen Ausführungsbeispiel also einer Wertzahl "2". Würde das Brennstoffzellenfahrzeug demgegenüber entlang der Fahrtroute 21b fahren, so stellt die Routenbestimmungseinrichtung 3 fest, dass insgesamt drei der Streckenabschnitte 291 zu durchqueren sind, entlang denen die Brennstoffzelle dem verstärkten Degradationseffekt unterliegt. Ein mit der Häufigkeit der Streckenabschnitte 291 korrelierender Gesamtdegradationsgrad entlang der zweiten Fahrtroute 21b würde also einer Wertzahl "3" entsprechen. Auf dieser Grundlage der Häufigkeitsverteilung der Streckenabschnitte 291 mit verstärktem Degradationseffekt wird die Routenbestimmungseinrichtung 3 die erste Fahrtroute 21a als die optimale Fahrtroute 30 auswählen, da sie den geringsten Gesamtdegradationsgrad für die Brennstoffzelle aufweist.

Anders verhält es sich allerdings, wenn die Routenbestimmungseinrichtung 3 ausgebildet ist, Streckenabschnitte 291 mit verstärktem Degradationseffekt zusätzlich in Ausprägungsgrade zu untergliedern. Im gezeigten Ausführungsbeispiel sind lediglich drei der Ausprägungsgrade gezeigt, wobei eine feinere Untergliederung möglich ist, so dass auch mehr als drei, aber auch lediglich zwei der Ausprägungsgrade vorhanden sein können.

In Figur 3 ist - wie in Figur 2 - die erste Fahrtroute 21a in sechs der Streckenabschnitte 29 untergliedert. Die zweite Fahrtroute 21b ist wiederum in fünf der Streckenabschnitte 29 untergliedert. Wie im Beispiel zuvor hat auch die Fahrtroute 21a insgesamt zwei der Streckenabschnitte 291 mit einem verstärkten Degradationseffekt. Die zweite Fahrtroute 21b hat ebenfalls wieder drei der Streckenabschnitte 291 mit einem verstärkten Degradationseffekt. Allerdings sind die Streckenabschnitte 291 mit verstärktem Degradationseffekt nunmehr in Ausprägungsgrade untergliedert, wobei bei der Auswahl der optimalen Fahrtroute 30 diejenigen Streckenabschnitte 29 mit einem höheren Ausprägungsgrad stärker gewichtet werden als diejenigen Streckenabschnitte 29 mit einem niedrigeren Ausprägungsgrad. Solche Konstellationen können beispielsweise eintreten, wenn ein Streckenabschnitten 29 eine erhöhte Steigung umfasst, die eine erhöhte Leistungsanforderung für die Brennstoffzelle bedeutet und zugleich eine erhöhte Emissionsbelastung entlang dieses Streckenabschnitts 29 aufgrund eines Verkehrsstaus vorliegt. Auf diese Weise lassen sich entlang der gleichen Streckenabschnitte 29 unterschiedliche Faktoren berücksichtigen, die die Effizienz der Brennstoffzelle beeinflussen.

Hinsichtlich der ersten Fahrtroute 21a erkennt die Routenbestimmungseinrichtung 3, dass ein erster Streckenabschnitt 291 mit verstärktem Degradationseffekt einen Streckenabschnitt 2912 umfasst, der einen mittleren Ausprägungsgrad besitzt. Zudem weist die erste Fahrtroute 21a einen Streckenabschnitt 291 mit einem verstärkten Degradationseffekt auf, der ein Streckenabschnitt 2913 mit einem hohem Ausprägungsgrad darstellt. Demgegenüber weist im gezeigten Beispiel die zweite Fahrtroute 21b insgesamt drei Streckenabschnitte 2911 auf, die zwar einen verstärkten Degradationseffekt aufweisen, der aber in einem geringem oder niedrigen Ausprägungsgrad vorliegt.

In einem einfachen Beispiel gewichtet die Routenbestimmungseinrichtung 3 die Streckenabschnitte 2911 einfach, die Streckenabschnitte 2912 zweifach und die Streckenabschnitte 2913 dreifach. Wenn auch hier wieder die Häufigkeiten der Streckenabschnite 291 zur Ermittlung des Gesamtdegrationsgrades herangezogen werden, so unterliegen die einzelnen Streckenabschnitte 291 mit verstärktem Degradationseffekt also einer Gewichtung. Entlang der ersten Fahrtroute 21a ergibt sich aufgrund dieser Gewichtung die Wertzahl "5". Bei der Ermittlung des Gesamtdegradationsgrads entlang der zweiten Fahrtroute 21b ergibt sich die Wertzahl "3", so dass die zweite Fahrtroute 21b von der Routenbestimmungseinrichtung 3 nun als die optimale Route 30 ausgewählt wird. Sollte sich aber beispielsweise die gleiche Wertzahl für die Routen ergeben, so kann das System auch die beiden Routen nach weiteren Optimierungskriterien klassifizieren (bspw. Zeit, Streckenlänge, et cetera) und die dann optimale Route wählen.

Durch eine derartige Routenwahl und Routenberechnung kann einer erhöhten Alterung des Brennstoffzellensystems 1 vorgebeugt werden.

### BEZUGSZEICHENLISTE:

- 1: Brennstoffzellensystem
- 2: Navigationssystem
- 3: Routenbestimmungseinrichtung
- 4: Datenempfangseinrichtung
- 5: Brennstoffzellenstapel
- 6: GPS-Sensor
- 7: Datendienst
- 8: Kommunikationsverbindung
- 9: Sensor
- 10: Speichereinheit
- 11: Wetterdaten
- 12: Positionsdaten
- 13: Verdichter
- 14: Ladeluftkühler
- 15: Befeuchter
- 16: Kathodenzufuhrleitung
- 17: Kathodenabgasleitung
- 18: Verdichterleitung
- 19: Abgasleitung
- 20: topografische Karte
- 21a: (erste) Fahrtroute
- 21b: (zweite) Fahrtroute
- 22: Anodenzufuhrleitung
- 23: Brennstoffstellglied
- 24: Anodenrezirkulationsleitung
- 25: Wärmetauscher
- 26: Brennstoffspeicher
- 27: Startposition
- 28: Zielposition
- 29: Streckenabschnitt
- 30: optimale Fahrtroute
- 31: Satellit
- 290: Streckenabschnitt mit keinem oder geringem Degradationseffekt
- 291: Streckenabschnitt mit einem verstärkten Degradationseffekt
- 2910: Streckenabschnitt mit keinem oder geringem Degradationseffekt
- 2911: Streckenabschnitt mit einem verstärkten Degradationseffekt mit einem geringem Ausprägungsgrad
- 2912: Streckenabschnitt mit einem verstärkten Degradationseffekt mit einem mittlerem Ausprägungsgrad
- 2913: Streckenabschnitt mit einem verstärkten Degradationseffekt mit einem hohem Ausprägungsgrad

## Patentansprüche

1. Verfahren zur Ermittlung einer optimalen Fahrtroute (30) für ein Brennstoffzellenfahrzeug mit wenigstens einer Brennstoffzelle sowie mit einem Navigationssystem (2), umfassend:
- Bereitstellen einer topografischen Karte (20), die mehrere Streckenabschnitte (29) umfasst,
- Ermitteln von wenigstens zwei Fahrtrouten (21a, 21b) von einer Startposition (27) zu einer Zielposition (28), die aus einem oder aus mehreren der Streckenabschnitte (29) zusammengesetzt sind,
- Identifizieren derjenigen Streckenabschnitte (291), entlang welchen die Brennstoffzelle einem erwarteten verstärktem Degradationseffekt unterliegt,
- Ermitteln eines Gesamtdegradationsgrads der Brennstoffzelle für jede der ermittelten Fahrtrouten (21a, 21b) anhand der zur jeweiligen Fahrtroute (21a, 21b) identifizierten Streckenabschnitte (291) mit dem verstärkten Degradationseffekt der Brennstoffzelle, und
- Auswahl derjenigen Fahrtroute (21a, 21b) als die optimale Fahrtroute (30), die den geringsten Gesamtdegradationsgrad der Brennstoffzelle aufweist,
**dadurch gekennzeichnet, dass** ein Streckenabschnitt (29) dann als einer der Streckenabschnitte (291) mit verstärktem Degradationseffekt klassifiziert wird, wenn dort eine erhöhte Emissionsbelastung zu erwarten ist.

2. Verfahren nach Anspruch 1, **dadurch gekennzeichnet, dass** ein Streckenabschnitt (29) dann als einer der Streckenabschnitte (291) mit verstärktem Degradationseffekt klassifiziert wird, wenn dort ein erhöhter Leistungsbedarf der Brennstoffzelle zu erwarten ist.

3. Verfahren nach einem der Ansprüche 1 oder 2, **dadurch gekennzeichnet, dass** ein Streckenabschnitt (29) dann als einer der Streckenabschnitte (291) mit verstärktem Degradationseffekt klassifiziert wird, wenn dort prognostizierte Wetterdaten (11) negativ für den Betrieb der Brennstoffzelle sind.

4. Verfahren nach einem der Ansprüche 1 bis 3, **dadurch gekennzeichnet, dass** ein Streckenabschnitt (29) dann als einer der Streckenabschnitte (291) mit verstärktem Degradationseffekt klassifiziert wird, wenn eine dort prognostizierte Verkehrslage negativ für den Betrieb der Brennstoffzelle ist.

5. Verfahren nach einem der Ansprüche 1 bis 4, **dadurch gekennzeichnet, dass** der verstärkte Degradationseffekt in Ausprägungsgrade untergliedert wird, und dass bei der Ermittlung des Gesamtdegradationsgrades diejenigen Streckenabschnitte (2912;2913) mit verstärktem Degradationseffekt in einem höherem Ausprägungsgrad stärker gewichtet werden als diejenigen Streckenabschnitte (2910;2911) mit verstärktem Degradationseffekt in einem niedrigerem Ausprägungsgrad.

6. Verfahren nach einem der Ansprüche 1 bis 5, **dadurch gekennzeichnet, dass** ein Degradationsmaß der Brennstoffzelle bestimmt wird, und dass die Ermittlung der optimalen Fahrtroute (30) zusätzlich in Abhängigkeit dieses Degradationsmaßes erfolgt.

7. Navigationssystem (2) für ein wenigstens eine Brennstoffzelle aufweisendes Brennstoffzellenfahrzeug, mit einer Speichereinheit (10), in welcher zumindest zeitweise eine mehrere Streckenabschnitte (29) umfassende topografische Karte (20) hinterlegt oder hinterlegbar ist, und mit einer Routenbestimmungseinrichtung (3), die ausgebildet ist, wenigstens zwei Fahrtrouten (21a, 21b) von einer Startposition (27) zu einer Zielposition (28) zu ermitteln, welche aus einem oder aus mehreren der Streckenabschnitte (29) zusammengesetzt sind, wobei die Routenbestimmungseinrichtung (3) ausgebildet ist,
- diejenigen Streckenabschnitte (291) zu identifizieren, entlang welchen die Brennstoffzelle einem erwarteten verstärktem Degradationseffekt unterliegt,
- einen Gesamtdegradationsgrad der Brennstoffzelle für jede der ermittelten Fahrtrouten (21a, 21b) anhand der zur jeweiligen Fahrtroute (21a, 21b) identifizierten Streckenabschnitte (291) mit dem verstärkten Degradationseffekt der Brennstoffzelle zu ermitteln, und
- diejenige Fahrtroute (21a, 21b) als eine optimale Fahrtroute (30) auszuwählen, die den geringsten Gesamtdegradationsgrad der Brennstoffzelle aufweist,
**dadurch gekennzeichnet, dass** eine Datenempfangseinrichtung (4) vorhanden ist zum streckenabschnittsbezogenen Empfang von Daten zur Emissionsbelastung, und dass die Routenbestimmungseinrichtung ausgebildet ist, die Daten zur Emissionsbelastung bei der Auswahl der optimalen Fahrtroute zu berücksichtigen.

8. Navigationssystem (2) nach Anspruch 7, **dadurch gekennzeichnet, dass** eine Datenempfangseinrichtung (4) vorhanden ist zum streckenabschnittsbezogenen Empfang von Wetterdaten (11) und/oder von Daten zur Verkehrslage und/oder von Positionsdaten (12).

9. Brennstoffzellenfahrzeug mit einem wenigstens eine Brennstoffzelle umfassenden Brennstoffzellensystem (1) und mit einem Navigationssystem (2) nach Anspruch 7 oder 8.

## Claims

1. Method for determining an optimal travel route (30) for a fuel cell vehicle with at least one fuel cell and with a navigation system (2), comprising:
- Providing a topographic map (20) comprising several route sections (29),
- Determining at least two travel routes (21a, 21b) from a start position (27) to a destination position (28) composed of one or more of the route sections (29),
- Identifying those route sections (291) along which the fuel cell is subject to an expected enhanced degradation effect,
- Determining an overall degree of degradation of the fuel cell for each of the determined routes (21a, 21b) on base of the respective route (21a, 21b) with the lowest overall fuel cell degradation effect,
- Choosing of that route (21a, 21b) as the optimal travel route (30), which comprises the lowest overall degree of degradation, **characterized in that** a route section (29) is classified as one of the route sections (291) with an increased degradation effect if an increased emission load is to be expected there.

2. The method according to claim 1, **characterized in that** a route section (29) is classified as one of the sections (291) with increased degradation effect if an increased power demand of the fuel cell is to be expected there.

3. The method according to any one of claims 1 to 2, **characterized in that** a route section (29) is classified as one of the route sections (291) with increased degradation effect if forecasted weather data (11) there are negative for the operation of the fuel cell.

4. The method according to any one of claims 1 to 3, **characterized in that** a route section (29) is classified as one of the route sections (291) with increased degradation effect if a traffic situation predicted there is negative for the operation of the fuel cell.

5. The method according to any one of claims 1 to 4, **characterized in that** the increased degradation effect is subdivided into degrees of expression, and **in that**, when determining the overall degree of degradation, those route sections (2912, 2913) with increased degradation effect in a higher degree of expression are weighted more heavily than those route sections (2910, 2911) with increased degradation effect in a lower degree of expression.

6. The method according to any one of claims 1 to 5, **characterized in that** a degradation measure of the fuel cell is determined, and **in that** the determination of the optimal travel route (30) is additionally performed as a function of this degradation measure.

7. A navigation system (2) for a fuel cell vehicle having at least one fuel cell, having a memory unit (10) in which a topographical map (20) comprising a plurality of route sections (29) is stored or can be stored at least temporarily, and having a route determination device (3) which is designed to determine at least two routes (21a, 21b) from a starting position (27) to a destination position (28), which routes are composed of one or more of the routes are composed of one or more of the route sections (29), the route determination device (3) being designed,
- to identify those route sections (291) along which the fuel cell is subject to an expected increased degradation effect
- to determine an overall degree of degradation of the fuel cell for each of the determined routes (21a, 21b) on the basis of the route sections (291) identified for the respective route (21a, 21b) with the increased degradation effect of the fuel cell, and
- to select as an optimum driving route (30) that driving route (21a, 21b) as an optimal travel route (30), which has the lowest overall degradation effect of the fuel cell, **characterized in that** a data receiving means (4) is provided for receiving emission load data on a route section basis, and **in that** the route determining means is adapted to take the emission load data into account in selecting the optimal travel route.

8. The navigation system (2) according to claim 7, **characterized in that** a data receiving device (4) is provided for receiving, in relation to a route section, weather data (11) and/or data on the traffic situation and/or position data (12).

9. A fuel cell vehicle with a fuel cell system (1) comprising at least one fuel cell and with the navigation system (2) according to claim 7 or 8.

## Revendications

1. Procédé de détermination d'un itinéraire de conduite (30) optimal pour un véhicule à pile à combustible avec au moins une pile à combustible ainsi qu'avec un système de navigation (2) comprenant :
- la fourniture d'une carte topographique (20) qui comporte plusieurs tronçons routiers (29),
- la détermination d'au moins deux itinéraires de conduite (21a, 21b) d'une position de départ (27) à une position de destination (28), lesquels sont composés d'un ou de plusieurs des tronçons routiers (29),
- l'identification des tronçons routiers (291), le long desquels la pile à combustible est soumise à un effet de dégradation amplifié attendu,
- la détermination d'un degré de dégradation total de la pile à combustible pour chacun des itinéraires de conduite (21a, 21b) déterminés à l'aide des tronçons routiers (291) identifiés pour l'itinéraire de conduite (21a, 21b) respectif avec l'effet de dégradation amplifié de la pile à combustible, et
- la sélection de l'itinéraire de conduite (21a, 21b) comme l'itinéraire de conduite (30) optimal qui présente le degré de dégradation total le plus faible de la pile à combustible,
**caractérisé en ce qu'**un tronçon routier (29) est ensuite classé comme un des tronçons routiers (291) avec un effet de dégradation renforcé lorsqu'une sollicitation d'émission accrue y est à attendre.

2. Procédé selon la revendication 1, **caractérisé en ce qu'**un tronçon routier (29) est ensuite classé comme un des tronçons routiers (291) avec un effet de dégradation amplifié lorsqu'un besoin en énergie accru de la pile à combustible y est à attendre.

3. Procédé selon l'une quelconque des revendications 1 ou 2, **caractérisé en ce qu'**un tronçon routier (29) est ensuite classé comme un des tronçons routiers (291) avec un effet de dégradation amplifié lorsque des données météorologiques (11) qui y sont pronostiquées sont négatives pour le fonctionnement de la pile à combustible.

4. Procédé selon l'une quelconque des revendications 1 à 3, **caractérisé en ce qu'**un tronçon routier (29) est ensuite classé comme un des tronçons routiers (291) avec un effet de dégradation amplifié lorsqu'un état de circulation qui y est pronostiqué est négatif pour le fonctionnement de la pile à combustible.

5. Procédé selon l'une quelconque des revendications 1 à 4, **caractérisé en ce que** l'effet de dégradation amplifié est divisé en degrés de gravité, et que lors de la détermination du degré de dégradation total, les tronçons routiers (2912 ; 2913) avec un effet de dégradation amplifié sont plus fortement pondérés dans un degré de gravité supérieur que les tronçons routiers (2910 ; 2911) avec un effet de dégradation amplifié dans un degré de gravité inférieur.

6. Procédé selon l'une quelconque des revendications 1 à 5, **caractérisé en ce qu'**une mesure de dégradation de la pile à combustible est déterminée, et que la détermination de l'itinéraire de conduite (30) optimal est en outre effectuée en fonction de cette mesure de dégradation.

7. Système de navigation (2) pour un véhicule à pile à combustible présentant au moins une pile à combustible avec une unité à mémoire (10), dans laquelle au moins temporairement, une carte topographique (20) comprenant plusieurs tronçons routiers (29) est ou peut être enregistrée, et avec un dispositif de détermination d'itinéraire (3) qui est réalisé afin de déterminer au moins deux itinéraires de conduite (21a, 21b) d'une position de départ (27) à une position de destination (28), lesquels sont composés d'un ou de plusieurs de tronçons routiers (29), dans lequel le dispositif de détermination d'itinéraire (3) est réalisé
- afin d'identifier les tronçons routiers (291), le long desquels la pile à combustible est soumise à un effet de dégradation amplifié attendu,
- afin de déterminer un degré de dégradation total de la pile à combustible pour chacun des itinéraires de conduite (21a, 21b) déterminés à l'aide des tronçons routiers (291) identifiés pour l'itinéraire de conduite (21a, 21b) respectif avec l'effet de dégradation amplifié de la pile à combustible, et
- afin de sélectionner l'itinéraire de conduite (21a, 21b) comme un itinéraire de conduite (30) optimal qui présente le degré de dégradation total le plus faible de la pile à combustible,
**caractérisé en ce qu'**un dispositif de réception de données (4) est présent pour la réception de données liée au tronçon routier pour la sollicitation d'émission, et que le dispositif de détermination d'itinéraire est réalisé afin de prendre en compte les données pour la sollicitation d'émission lors de la sélection de l'itinéraire de conduite optimal.

8. Système de navigation (2) selon la revendication 7, **caractérisé en ce qu'**un dispositif de réception de données (4) est présent pour la réception de données météorologiques (11) liée au tronçon routier et/ou de données d'état de circulation et/ou de données de position (12).

9. Véhicule à pile à combustible avec un système de pile à combustible (1) comprenant au moins une pile à combustible et avec un système de navigation (2) selon la revendication 7 ou 8.
